# EUROPÄISCHE PATENTSCHRIFT

(11) **EP 0 504 613 B1**
(45) Veröffentlichungstag und Bekanntmachung des Hinweises auf die Patenterteilung: **10.06.1998**
(21) Anmeldenummer: 92102940.1
(22) Anmeldetag: 21.02.1992
(51) Int. Cl.: G02B 27/00, G01C 23/00, G02B 27/64, B64D 43/00

(54) **Anzeigeinstrument für Luftfahrzeuge zur Darstellung der Fluglage, insbesondere der Roll- und Nicklage bzw. des Flugbahnwinkels**
Display instrument for aircraft for presentation of the flight parameters, in particular the roll and pitch attitudes, i.e. the flight-path angles
Instrument indicateur pour aéronef pour affichage des paramètres de vol, en particulier, le roulis et le tangage c'est-à-dire les angles définissant la trajectoire de vol

(30) Priorität: 20.03.1991 DE 4109016
(43) Veröffentlichungstag der Anmeldung: 23.09.1992
(73) Patentinhaber: Daimler-Benz Aerospace Aktiengesellschaft, 81663 München (DE)
(72) Erfinder: Fischer, Gerhard, Dipl.-Ing., W-7997 Immenstaad (DE); Fuchs, Wernder, Dipl.-Ing., W-7778 Markdorf (DE)

(56) Entgegenhaltungen:
- EP-A- 204 617
- EP-A- 358 619
- WO-A-86/06160
- GB-A- 2 189 641
- US-A- 2 055 495

## Beschreibung

Die vorliegende Erfindung betrifft ein Anzeigeinstrument für Luftfahrzeuge zur Darstellung der Fluglage, insbesondere der Roll- und Nicklage bzw. des Bahnwinkels, mittels eines "HEAD-UP DISPLAYS", oder eines Bildschirmaufzeichnungsgerätes mit Darstellung eines Symbols und einem erdfest stabilisierten Symbols für die Darstellung des wahren Horizonts, sowie Symbolen für die Anzeige des Roll- und Nickwinkels bzw. des Flugbahnwinkels. Ein solches Projektions gerät ist im Dokument WO-A- 86 06160 beschrieben.

Bedingt durch immer höhere Fluggeschwindigkeiten und damit auch höhere Beschleunigungen bei Flugmanövern, sowohl bei zivilen und insbesondere auch bei Flugzeugen für den militärischen Einsatz und gleichzeitig steigender Arbeitsbelastung der Piloten durch zunehmende Komplizierung der Flugsysteme, müssen mehr und mehr Instrumente ständig überwacht werden, ohne die Außenwelt aus den Augen zu verlieren. Ein Gerät zur Darstellung der Fluglage ist im Dokument US-A-4 626 851 offenbart.

Zur Entlastung dienen sogenannte "HEAD-UP DISPLAYS" (HUD), mit deren Hilfe die Instrumentenanzeige dem Ausblick in den Luftraum, den der Pilot vor sich hat, überlagert wird.

Die für die Flugführung erforderlichen Informationsdaten, beispielsweise des Lagewinkels Θ, des Rollwinkels Φ und der Richtung der Flugzeughauptachse (Flugzeug längsachse), werden in bekannter Weise elektronisch in Form von Symbolen aufgezeichnet und mit Hilfe einer Kathodenstrahlröhre oder einer entsprechend gesteuerten Fernsehanlage oder eine Nachtsichteinrichtung angezeigt.

Unter anderem sind Hauptteile solcher Einrichtungen ein Anzeigegerät für den Piloten, ein Symbolgenerator zur Erzeugung einer Anzeigesymbolik und Reflektoren für die Einspiegelung der Symbole in die Flugzeugfrontscheibe.

Für die Flugführung wesentliche und auf dem "HEAD-UP DISPLAY" darzustellende Instrumenten-Anzeigewerte sind unter anderem auch solche, die in Zahlen oder Zeichen, wie Punkt- oder Stricheinteilungen, Instrumentenmeßwerte der Flughöhe, des Kompaßkurses oder des Anstellwinkels anzeigen.

Zur Fluglagedarstellung und zur räumlichen Orientierung der Flugzeugführer, werden allgemein in sämtlichen mit "HEAD-UP DISPLAYS" ausgerüsteten Flugzeugen sogenannte Nickleitern in Verbindung mit flugzeugfest beziehungsweise erdfest stabilisierten Referenzsymbolen verwendet.
Diese Fluglage-Referenzanzeigen werden meist proportional zu den Roll- und Nickgeschwindigkeiten des Flugzeuges bewegt.
Die Interpretierbarkeit derartiger Darstellungsweisen verschlechtert sich jedoch in zunehmendem Maße mit zunehmender Agilität der Flugzeuge.

Aufgabe der Erfindung ist eine Verbesserung der Fluglageorientierung für Flugzeugführer, insbesondere bei hochdynamischen Flugmanövern, mittels stationär leicht interpretierbarer Fluglagedarstellung unter Verzicht auf Lagereferenzanzeigen, die flugzeugnick- beziehungsweise flugzeugrollgeschwindigkeitsabhängig bewegt werden müssen.

Die gestellte Aufgabe ist gelöst nach den kennzeichnenden Merkmalen des Anspruchs 1 und in weiterer vorteilhafter Ausgestaltung des Haupterfindungsgedankens nach den Merkmalen der dem Anspruch 1 folgenden Ansprüche.

Ein erfindungsgemäß ausgebildetes Anzeigeinstrument erlaubt die Bildung flugzeugfest bzw. erdfest stabilisierter Symbole, bzw. Informationssymbole, die ein rasches, intuitives Erfassen der jeweiligen Flugsituation bzw. Fluglage durch den Piloten, insbesondere auch bei hohen Nick- bzw. Rollgeschwindigkeiten ermöglicht. In der Normalfluglage befindet sich dabei das Informationssymbol exakt über dem als Halbkreissegment dargestellten Fluglagesymbol; bzw. kann durch entsprechende Steuerbewegungen des Piloten das Flugzeug aus einer von der Normalfluglage abweichenden Fluglage unter Beachtung der Veränderung des Informationssymbols hin zu einer Sektor- bzw. Ringsektorform mit einem Zentriwinkel von 180° vom Piloten intuitiv die Normalfluglage zurückgeführt werden.

Die Symbolik gemäß der Erfindung erlaubt alternativ zur Anzeige von Rollund Nickwinkel auch die Anzeige von Roll- und Flugbahnwinkel γ. Im Falle der Anzeige des Bahnwinkels beträgt die Segmentlänge (Zentriwinkel) 180° - 2 • dem Bahnwinkel γ.

In der Zeichnung ist ein Ausführungsbeispiel gemäß der Erfindung dargestellt. Das Ausführungsbeispiel ist anhand der nachfolgenden Beschreibung näher erläutert.

Es zeigen:
- Fig. 1: den Gesamtaufbau eines Frontscheiben-Projektionsgerätes (HEAD-UP DISPLAY) bekannter Bauweise, in schematischer Darstellung,
- Fig. 2: eine Symboldarstellung für die Anzeige im Außenwelt-Blickfeld des Piloten, in bekannter Darstellungsweise, schematisiert dargestellt,
- Fig. 3: die Symboldarstellung gemäß der Erfindung für die vorgegebene Normalfluglage, schematisiert dargestellt,
- Fig. 4: eine Symboldarstellung mit gegenüber der Anzeige gemäß Fig. 3 veränderter Fluglage schematisiert darstellt und
- Fig. 5: bis 12 weitere Beispiele der Symboldarstellung für zueinander unterschiedliche Fluglagen des Fluggerätes, schematisiert dargestellt.

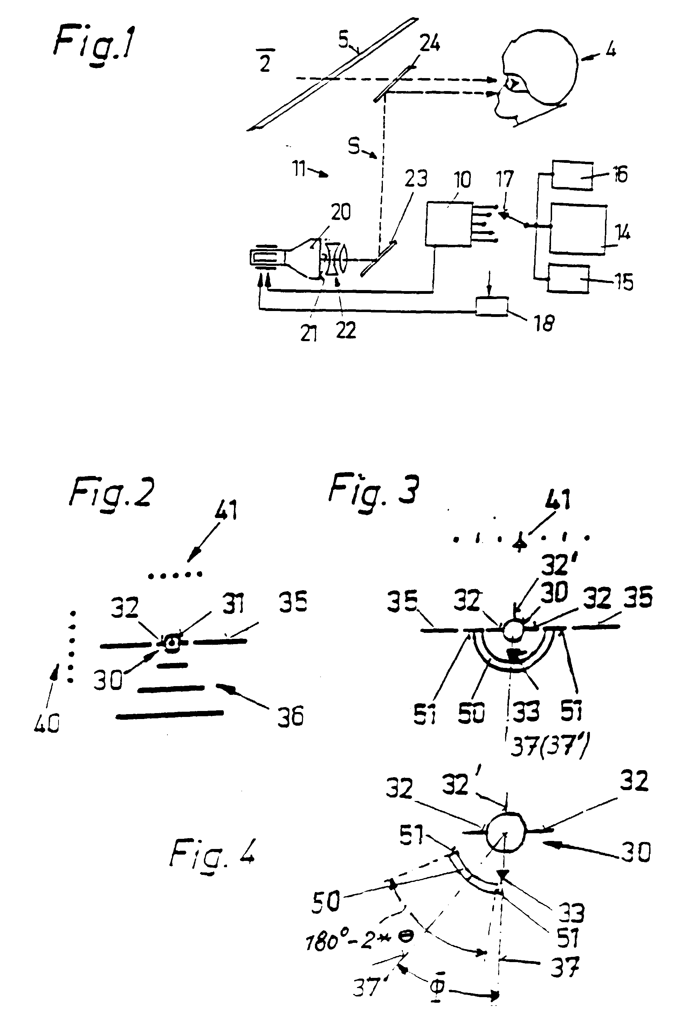

Das in Fig. 1 dargestellte Frontscheiben-Projektionsgerät ist für die Darstellung, insbesondere von Fluginformationen für im Flug befindliche Flugzeuge vorgesehen.
Die Darstellung erfolgt in allgemein bekannter Weise im Bereich der Frontscheibe des Flugzeuges, innerhalb des Außenwelt-Blickfeldes des Piloten.

Zur Anzeige kommen hier Situationsinformationen der durch Meßgeräte aufgenommenen Werte der Nicklage Θ, der Rollage Φ, des Azimutwinkels, der Fluggeschwindigkeit und der Flughöhe.

Die Anzeige im Blickfeld **2** des Piloten **4** erfolgt, wie bei der in Fig. 1 vereinfacht dargestellten Ausführung gezeigt, mittels Informationen in Form von Punkteinteilungen **40**, **41** und in Form von Symbolen.
Die durch die Meßgeräte aufgenommenen Werte werden beim gezeigten Ausführungsbeispiel vom Bordrechner **14** in Verbindung mit einer Navigationsanlage **15**, betätigbar mittels eines Bediengeräts **16**, über einen Betriebsarten-Wählschalter **17** dem Symbolgenerator **10** eingegeben. Das Frontscheiben-Projektionssystem **1** enthält in bekannter Weise zwei Grundeinheiten, und zwar den Symbolgenerator **10** und das Anzeigegerät **11**. Für die Darstellung der vom Symbolgenerator **10** erzeugten Anzeigesymbole oder Anzeigezeichen ist eine Kathodenstrahlröhre **20** an den Symbolgenerator **10** angeschlossen, auf deren Bildschirm **21** die Symbole dargestellt werden.
Das Anzeigegerät **11** des Frontscheiben-Projektionssystems **1** enthält in bekannter Weise einen dem Bildschirm **21** der Kathodenstrahlröhre **20** zugeordneten Ablenkspiegel **23** zur Totalreflexion des Abbildungsstrahls **S** und einen weiteren Ablenkspiegel **24** im Bereich der Frontscheide **5** des Flugzeuges **3** bzw. im Außenwelt-Blickfeld **2** des Piloten **4**. Der Ablenkspiegel **24** weist halbdurchlässige Eigenschaften auf, mit freier Sicht des Piloten **4** auf die Außenwelt.
In den Strahlengang **S** ist zwischen der Kathodenstrahlröhre **20** bzw. deren Bildschirm **21** und den Umlenkspiegeln **23** bzw. **24** ein Kollimator-Linsensystem **22** eingesetzt, mit dessen Hilfe und mit Hilfe des teildurchlässigen Spiegels **24**, die abgebildeten Anzeigesymbole auf dem Bildschirm **21** dem Außenwelt-Blickfeld **2** des Piloten **4** in der gleichen Ebene im Unendlichen überlagert erscheinen, sodaß eine ständige Adaption der Augen des Piloten an unterschiedliche Entfernungen vermieden werden kann.

Bei bekannten Darstellungen, wie in Fig. 2 der Zeichnung gezeigt, wird mittels des Symbolgenerators **20** für die Anzeige der Nick- bzw. der Rollage ein durch ein Kreissymbol **31** und waagerechte Balkensymbolen **32** zu beiden Seiten des Kreises **31** das Referenzsymbol **30** gebildet.
Ferner sind Balkensymbole **35** zur Darstellung des wahren Horizonts, sowie vertikal bzw. horizontal ausgerichtete Punktsymbole **40** bzw. **41** zur Darstellung des Azimutwinkels bzw. des Anstellwinkels vorgesehen.

Aus den Fig. 3 und 4, sowie den Fig. 5 bis 12 ist die Anzeigesymbolik gemäß der Erfindung erkennbar.
Bei der Darstellung gemäß Fig. 3 bis 12 sind für gleiche Gegenstände bzw. für die gleiche Symbolik die gleichen Bezugsziffern wie bei der bekannten Darstellung gemäß Fig. 2 verwendet.

Abweichend gegenüber der bekannten Symbolik nach Fig. 2 enthält die neue Anzeigesymbolik zur Anzeige des jeweiligen Nickwinkels Θ und des Rollwinkels Φ ein an das Referenzsymbol **30** gekoppeltes Informationssymbol **50** in Form einer Ringsektorfläche. Die Bogenlänge (Zentriwinkel) des Informationssymbols beträgt dabei 180° - 2 · dem Nickwinkel Θ. Beispielsweise beschreibt die Symboldarstellung für Θ = -90° eine Ringsektorfläche **50** = 360° und für Θ = 90° keine Darstellung eines Ringsektors.
Die Rollage Φ ergibt sich dabei aus der Lage des Informationssymbols **50** bzw. dessen radialer Mittelachse **37'** gegenüber dem Referenzsymbol **30** und Balkensymbol **32'**, dem Zeigersymbol **33** bzw. der Mittelachse **37**. Dabei liegt beispielsweise das Informationssymbol **50** bei Φ = 0° unterhalb und bei Φ = ± 180° oberhalb des Referenzsymbols **30** bzw. der Balkensymbole **32**.

Die jeweilige Bogenlänge des Informationssymbols **50** ist durch radiale Begrenzungs-Balkensymbole **51** dargestellt.
Das Informationssymbol **50** kann beispielsweise auch in Form eines Ringsegments oder auch als Kreisbogen eines Segments in Strichdarstellung gebildet sein. Die Schenkel des Zentriwinkels des Kreissektors bilden dabei entsprechend der Fluglage bezüglich des gemessenen Nickwinkels Θ die jeweilige Begrenzungen **51** des Zentriwinkels des Ringsektorsymbols (**50**).

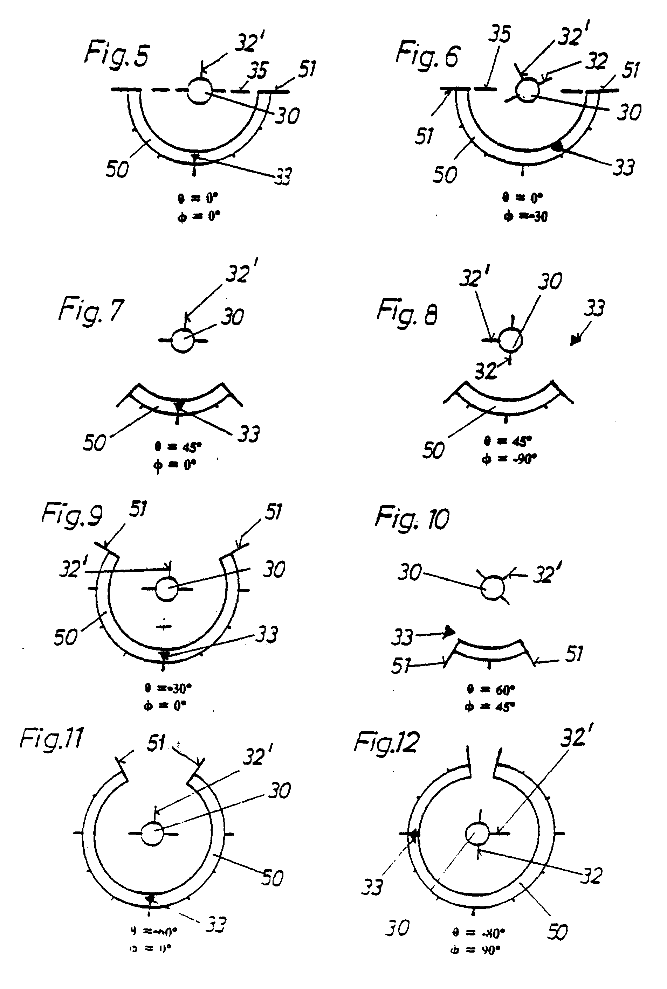

Die Fig. 5 bis 12 zeigen Beispiele der Darstellung bestimmter Fluglagen in bezug auf den jeweiligen Nickwinkel Θ bzw. Rollwinkel Φ mit entsprechender Anzeige des Informationssymbols **50**.

Die beschriebene Darstellungsweise erlaubt - auch bei hohen Nickgeschwindigkeiten - ein schnelles, intuitives Erfassen der Fluglage. Die Rückführung des Flugzeuges aus einer von der vorbestimmten Fluglage abweichenden Lage, wird sehr rasch erreicht durch eine Positionierung des Informationssymbols **50** unterhalb des Referenzsymbols **30** (Rollwinkel Θ = 0°) durch entsprechende Steuerbewegungen mittels des Flugzeugsteuerorgans, sodaß das Informationssymbol **50** eine Halbkreisform erhält.

## Patentansprüche

1. Anzeigesystem für Luftfahrzeuge zur Darstellung der Fluglage, insbesondere der Roll- und Nicklage bzw. des Flugbahnwinkels, das ein Frontscheiben-Projektionsgerät, auch "HEAD-UP DISPLAY" genannt, von in Aufbau und Wirkungsweise bekannter Art enthält, mit
- einem ein Flugzeug dargestellenden flugzeugfesten Symbol,
- einem erdfest stabilisierten Symbol für die Darstellung des künstlichen Horizonts, sowie einem
- Informationssymbol zur Anzeige des Roll- und Nickwinkels bzw. des Flugbahnwinkels,
**dadurch gekennzeichnet,**
- daß das Informationssymbol (50, 51) die Form einer Ringsektorfläche aufweist, wobei der Ringmittelpunkt im flugzeugfesten Symbol (30) liegt, die Bogenlänge eine Funktion des Nickwinkels (Θ) und die Lage seiner Mittelachse (37') eine Funktion der Rollage (Φ) ist,
- daß die Ringsektorfläche radial zum flugzeugfesten Symbol (30) verlaufende, sich in Abhängigkeit von den gemessenen Werten als Funktion der Rollage (Φ) in bezug auf ihren Abstand zur Mittelachse (37') ändernde Begrenzungsbalken (51) aufweist, die radial über die Ringsektorfläche hinausragen, und
- daß die Ringsektorfläche in einem radialen Abstand zum Flugzeugsymbol (30) abgebildet ist.

2. Anzeigesystem nach Anspruch 1, **dadurch gekennzeichnet,** daß die Bogenlänge (Winkel (Θ)) des Informationssymbols (50, 51) in jeder Rollage (Φ) bzw. Nicklage (Θ) die Größe 180° - 2·γ (γ = Bahnwinkel) aufweist.

3. Anzeigesystem nach Anspruch 1 oder 2, **dadurch gekennzeichnet,** daß die Anzeige des Nickwinkels (Θ) und des Rollwinkels (Φ) durch das Informationssymbol (50) an das Flugzeugsymbol (30) gefesselt erfolgt.

4. Anzeigesystem nach einem der vorgehenden Ansprüche, **dadurch gekennzeichnet,** daß das flugzeugfeste Symbol (30) die Form eines Kreises mit daran seitlich anschließenden, den Kreis mittig kreuzenden und zur Flugzeugachse parallelen Balken (32), mit einem in der Mittelachse (37) des Symbolkreises (30) liegenden, zu den Balken (32) vertikal gerichteten Balken (32') und einem im Bereich des Informationssymbols (50, 51) abgebildeten, flugzeugfesten Zeigersymbol (33) aufweist.

## Claims

1. A display system for aircraft for representing the flight position, particularly of the roll and pitch position or of the flight path angle, which contains a front screen projection device (also called a "HEAD-UP DISPLAY") of a type which is known as regards its construction and mode of operation, having
- an aircraft-fixed symbol representing an aircraft,
- a symbol which is stabilised in a ground-fixed manner for representing the artificial horizon, and having
- an information symbol for displaying the roll and pitch angle or the flight path angle,
**characterised in that**
- the information symbol (50, 51) has the form of a ring sector area. wherein the centre of the ring is situated in the aircraft-fixed symbol (30), the arc length is a function of the pitch angle (θ) and the position of its centre line (37') is a function of the roll position (Φ),
- that the ring sector area comprises delimiting bars (51) which extend radially in relation to the aircraft-fixed symbol (30), which depending on the measured values alter with respect to their distance from the centre line (37') as a function of the roll position (Φ), and which project radially beyond the ring sector area, and
- that the ring sector area is displayed at a radial distance from the aircraft symbol (30).

2. A display system according to claim 1, **characterised in that** the arc length (angle (θ)) of the information symbol (50, 51) has the magnitude 80° - 2·γ (γ = path angle) in each roll position (Φ) or pitch position (θ).

3. A display system according to claim 1 or 2, **characterised in that** the display of the pitch angle (θ) and of the roll angle (Φ) is effected by the information symbol (50) tied to the aircraft symbol (30).

4. A display system according to any one of the preceding claims, **characterised in that** the aircraft-fixed symbol (30) has the form of a circle, having bars (32) which are parallel to the aircraft axis, which adjoin the circle at the sides and which cross the circle centrally, having a bar (32') which is situated on the centre line (37) of the symbol circle (30) and which is oriented vertically in relation to the bars (32), and having an aircraft-fixed pointer symbol (33) which is displayed in the region of the information symbol (50, 51).

## Revendications

1. Système de visualisation pour avions pour la représentation de l'attitude, notamment pour la représentation du roulis et du tangage ou de l'angle de route, comprenant un appareil de projection de pare-brise (également nommé "viseur tête haute", en anglais "head-up display") dont la construction et le principe de fonctionnement sont connus, avec
- un symbole représentant un avion lié à l'avion,
- un symbole stabilisé lié à la terre pour la représentation de l'horizon artificiel et
- un symbole d'information pour indiquer les angles de roulis et de tangage et l'angle de route,
caractérisé
- par le fait que le symbole d'information (50, 51) se présente sous la forme d'un secteur d'anneau, le centre de l'anneau étant situé à l'intérieur du symbole (30) lié à l'avion, la longueur d'arc étant une fonction de l'angle de tangage (Θ) et la position de son axe médian (37') étant une fonction de l'angle de roulis (Φ),
- par le fait que le secteur d'anneau présente des segments de limitation (51) qui s'étendent radialement par rapport au symbole (30) lié à l'avion, dont la distance par rapport à l'axe médian (37') varie en relation avec les valeurs mesurées dépendant du roulis (Φ) et qui s'étendent radialement vers l'extérieur au-delà du secteur d'anneau et
- par le fait que le secteur d'anneau est représenté à une certaine distance radiale du symbole d'avion.

2. Système de visualisation selon la revendication 1, caractérisé par le fait que la longueur d'arc (angle (Θ)) du symbole d'information (50, 51) dans chaque position de roulis (Φ) voire de tangage (Θ) a la valeur 180° - 2*γ (γ = angle de route).

3. Système de visualisation selon la revendication 1 ou 2, caractérisé par le fait que la visualisation de l'angle de tangage (Θ) et de l'angle de roulis (Φ) par le symbole d'information (50) est liée au symbole d'avion (30)

4. Système de visualisation selon une des revendications précédentes, caractérisé par le fait que le symbole (30) lié à l'avion a la forme d'un cercle avec des segments parallèles à l'axe de l'avion qui coupent le cercle en son centre et s'y raccordent latéralement, avec un segment (32') qui est vertical par rapport aux segments (32) et est situé sur l'axe médian (37) du symbole circulaire (30) et avec un symbole index (33)lié à l'avion qui est affiché dans une zone du symbole d'information (50, 51).
